# FASCICULE DE BREVET EUROPEEN

(11) **EP 3 465 884 B1**
(45) Date de publication et mention de la délivrance du brevet: **17.09.2025**
(21) Numéro de dépôt: 17727892.6
(22) Date de dépôt: 06.06.2017
(51) Int. Cl.: H02K 5/20, H02K 9/19, H02K 9/16

(54) **ENVELOPPE D'UNE MACHINE ELECTRIQUE AVEC GAINE DE REFROIDISSEMENT**
GEHÄUSE EINER ELEKTRISCHEN MASCHINE MIT KÜHLMANTEL
CASING OF AN ELECTRIC MACHINE WITH A COOLING JACKET

(30) Priorité: 06.06.2016 FR 1655170
(43) Date de publication de la demande: 10.04.2019
(73) Titulaire: Moteurs Leroy-Somer, 16915 Angouleme Cedex 9 (FR)
(72) Inventeur: PERA, Thierry, 90000 BELFORT (FR); CICILIANI, Philippe, 25700 VALENTIGNEY (FR); KEREVER, Yohan, 90000 BELFORT (FR); LOFTI, Hamza, 90500 BEAUCOURT (FR)
(74) Mandataire: Ipsilon
(86) Numéro de dépôt international: PCT/EP2017/063678
(87) Numéro de publication internationale: WO 2017/211800

(56) Documents cités:
- DE-A1- 102007 009 394
- DE-A1- 102010 040 399
- DE-A1- 19 950 660

## Description

La présente invention concerne une carcasse de machine électrique à double enveloppe refroidie par une circulation d'un fluide au sein de la double enveloppe. La présente invention concerne également machine comportant une telle carcasse, ainsi qu'un procédé d'inspection de l'espace de circulation de fluide au sein de la double enveloppe. L'invention concerne encore un procédé de fabrication d'une telle carcasse.

### Arrière-plan

Les carcasses de machines électriques à double enveloppe refroidie par une circulation de fluide au sein de la double enveloppe sont généralement réalisées par soudage de pièces métalliques, avec fixation permanente des pièces entre elles. Ceci empêche une quelconque inspection visuelle du circuit de fluide.

Il est ainsi connu du brevet EP 1 953 897 une carcasse pour moteur électrique se présentant en deux parties assemblées entre elles à l'aide de joints de soudure pour former la double enveloppe. Chacune des parties est réalisée par fonderie.

Il est également connu du brevet US 7 626 292 une carcasse de machine électrique se présentant en deux parties assemblées entre elles par boulonnage. La partie interne de la carcasse est fabriquée par fonderie. Les canaux de circulation de liquide sont hélicoïdaux, ce qui impose un positionnement éloigné de l'entrée et de la sortie de liquide.

Le document DE 10 2010 040 399 décrit une enveloppe recevant un moteur électrique comportant une partie interne et une partie externe, l'une ou l'autre comportant une rainure concentrique de circulation d'un fluide de refroidissement. La partie externe est inséré sur la partie interne par coulissement de l'arrière de cette dernière. La partie interne comporte un flasque d'extrémité 14 venue de matière avec elle. Dans ce document, le flasque d'extrémité forme une seule pièce monolithique avec la partie interne et la partie externe est un manchon cylindrique sans paroi d'extrémité. Aucun jeu radial n'est mentionné entre le flasque d'extrémité et la partie externe.

Le document DE 10 2007 009394 divulgue une unité de pompage comportant un système de refroidissement par un liquide du moteur. Le système de refroidissement comporte une enveloppe interne et une enveloppe externe définissant entre elles un espace de circulation du liquide. L'enveloppe externe comporte des joints d'étanchéité. Aucun flasque d'extrémité arrière monté sur l'enveloppe interne n'est mentionné, ni une fixation par boulons, ni un jeu radial entre un flasque d'extrémité et l'enveloppe externe.

Le document DE 199 50 660 décrit un dispositif de refroidissement pour moteur comportant un tube interne fermée à son extrémité arrière par des flasques et un tube externe formant entre le tube interne et le tube externe un espace de circulation du fluide de refroidissement. Dans ce document, la partie externe est un manchon cylindrique sans paroi d'extrémité. Aucun jeu radial n'est mentionné entre le flasque d'extrémité et la partie externe.

### Résumé

Il existe un besoin pour disposer d'une carcasse de machine électrique à double enveloppe refroidie par une circulation d'un fluide au sein de la double enveloppe permettant une inspection visuelle du circuit de fluide aisée. Il existe également un besoin pour bénéficier d'une carcasse capable d'opérer de manière fiable dans des conditions d'environnement les plus sévères, telles que rencontrées dans le domaine nucléaire.

L'invention répond à ce besoin, selon un premier de ses aspects, à l'aide d'une carcasse de machine électrique à double enveloppe refroidie par une circulation d'un fluide au sein de la double enveloppe selon la revendication 1.

Le fait que l'enveloppe interne et l'enveloppe externe soient amovibles permet d'inspecter l'espace de circulation de fluide afin notamment de détecter d'éventuels éléments indésirables dans l'espace de circulation du fluide.

Le fait qu'il ne soit pas nécessaire de démonter le flasque d'extrémité pour séparer l'enveloppe externe de l'enveloppe interne simplifie le processus de démontage lors de l'inspection de l'espace de circulation de fluide.

L'enveloppe externe est séparable de l'enveloppe interne par coulissement de l'enveloppe externe vers l'arrière le long de l'enveloppe interne.

L'enveloppe interne présente une paroi d'extrémité arrière orientée perpendiculairement à l'axe de rotation de la machine et venant en recouvrement sur une partie de sa hauteur du flasque d'extrémité, le flasque d'extrémité étant monté sur la paroi d'extrémité arrière de l'enveloppe interne, notamment fixé à la paroi d'extrémité arrière de l'enveloppe interne.

L'enveloppe externe est fixée de façon amovible à l'enveloppe interne, notamment par boulonnage. Elle peut être fixée de façon amovible au flasque d'extrémité, notamment par boulonnage.

L'enveloppe externe présente une paroi d'extrémité arrière orientée perpendiculairement à l'axe de rotation de la machine et venant au moins partiellement en recouvrement de l'enveloppe interne, notamment de la paroi d'extrémité arrière de l'enveloppe interne, dans le prolongement du flasque d'extrémité, l'enveloppe externe étant notamment fixée à l'enveloppe interne par boulonnage. Le flasque d'extrémité peut être dépourvu d'éléments de fixation à l'enveloppe externe.

De préférence, la carcasse comporte un joint d'étanchéité, notamment un joint torique, entre la paroi d'extrémité arrière de l'enveloppe interne et la paroi d'extrémité arrière de l'enveloppe externe. Un tel joint permet d'assurer l'étanchéité de l'espace de circulation de fluide à l'extrémité de la carcasse. Ce joint peut être logé dans une gorge annulaire usinée dans la paroi d'extrémité arrière de l'enveloppe interne et/ou la paroi d'extrémité arrière de l'enveloppe externe.

L'enveloppe externe ménage avec le flasque d'extrémité un jeu radial *e.* Ce jeu radial peut être compris entre 0,5 mm et 5 mm.

Le fait que la paroi d'extrémité de l'enveloppe interne soit au contact d'un flasque et que la paroi d'extrémité de l'enveloppe externe et le flasque d'extrémité soient séparés par un jeu radial garantit que le fluide qui pourrait s'échapper de l'espace de circulation de fluide en cas de défaillance du joint d'étanchéité ne s'écoule pas à l'intérieur mais vers l'extérieur, au travers du jeu radial. Ainsi, l'intérieur de la machine reste protégé vis-à-vis d'une éventuelle défaillance du joint.

De préférence, l'enveloppe interne comporte une bride d'assemblage avant sur laquelle une paroi d'extrémité avant de l'enveloppe externe est fixée.

De préférence, l'enveloppe externe recouvre l'enveloppe interne sur une partie seulement de sa longueur. Ceci permet d'avoir une portion de l'enveloppe interne qui n'est pas recouverte par l'enveloppe externe pour intégrer à la machine des éléments extérieurs à la carcasse, par exemple une boîte à bornes, sans compliquer la séparation des deux enveloppes.

De préférence, l'enveloppe interne comporte un passage de câbles, vers une boîte à bornes de la machine, le passage de câble étant en avant de l'enveloppe externe, notamment en avant de la bride d'assemblage avant de l'enveloppe interne. De préférence, l'enveloppe externe comporte un support de boîte à bornes sur lequel la boîte à bornes de la machine est fixée de manière amovible. De la sorte, le passage de câble est dans la portion de l'enveloppe interne non recouvert par l'enveloppe externe. Il n'est donc pas nécessaire de démonter la boîte à bornes de la machine lors de l'inspection de l'espace de circulation de fluide.

Il est avantageux que l'enveloppe interne et l'enveloppe externe soient en acier inoxydable, venu de forge.

La surface extérieure de l'enveloppe interne et/ou la surface interne de l'enveloppe externe présentent, de préférence, des nervures, notamment des nervures longitudinales, formant des chicanes dans l'espace de circulation du fluide.

De préférence, les nervures sont longitudinales, pour canaliser le fluide au sein de la double enveloppe. De telles nervures permettent, lorsque les deux enveloppes sont assemblées, de former des chicanes allongeant le parcours du fluide entre les deux enveloppes, notamment l'obligeant à circuler en zigzag, ce qui permet un meilleur refroidissement de la machine électrique.

Les nervures peuvent être telles qu'une fois les enveloppes interne et externe assemblées entre elles, les nervures soient équiréparties autour de la carcasse. Ceci permet de refroidir la machine de façon homogène.

La carcasse peut comporter entre 6 et 16 nervures.

De préférence, la distance entre deux nervures consécutives dans le sens circonférentiel est comprise entre 6 cm et 30 cm.

La circulation du fluide s'effectue de préférence avec l'extérieur, et l'enveloppe externe peut comporter un orifice d'entrée du fluide dans l'espace de circulation de fluide et un orifice de sortie de fluide de cet espace de circulation de fluide.

De par l'orientation longitudinale des canaux, les orifices d'entrée et de sortie du fluide peuvent être à sensiblement la même position axiale, à l'opposé l'un de l'autre ou à proximité l'un de l'autre. Ceci permet de faciliter le raccordement de la carcasse à l'alimentation de fluide.

De préférence, l'espace de circulation du fluide est délimité latéralement par la bride d'assemblage avant de l'enveloppe interne et la paroi d'extrémité arrière de l'enveloppe externe et les nervures s'étendent alternativement à partir de l'une et de l'autre de la bride et de la paroi.

La carcasse peut comporter au moins une vis sans tête portée par l'une des enveloppes et l'autre enveloppe un perçage dans lequel peut s'engager cette vis. Cela permet, au montage des enveloppes, un repérage angulaire de l'enveloppe interne par rapport à l'enveloppe externe.

L'enveloppe interne et/ou l'enveloppe externe peuvent comporter des pattes de levage de la carcasse.

### Machine électrique

L'invention a également pour objet une machine électrique à double enveloppe refroidie par une circulation d'un fluide au sein de la double enveloppe comportant une carcasse telle que décrite précédemment.

La machine électrique peut comporter une boîte à bornes portée par l'enveloppe interne, notamment par un passage de câbles vers la boîte à bornes.

De préférence, l'enveloppe externe est séparable de l'enveloppe interne sans démontage de la boîte à bornes. La boîte à bornes peut être fixée de manière amovible à l'enveloppe externe, notamment à un support de boîte à bornes de l'enveloppe externe.

### Procédé d'inspection

L'invention a également pour objet un procédé d'inspection de l'espace de circulation de fluide selon la revendication 12.

La carcasse selon le premier aspect de l'invention peut être fabriquée selon le procédé suivant.

### Procédé de fabrication

L'invention a pour objet, selon un deuxième de ses aspects non revendiqué un procédé de fabrication d'une carcasse de machine électrique à double enveloppe refroidie par une circulation d'un fluide au sein de la double enveloppe, notamment une carcasse telle que décrit précédemment, comportant les étapes consistant à usiner une enveloppe interne et une enveloppe externe de la carcasse dans une même pièce métallique de départ et à fixer de façon amovible les enveloppes interne et externe entre elles.

Le fait que les enveloppes interne et externe soient usinées à partir de la même pièce métallique de départ permet de réduire le nombre de pièces à référencer nécessaires à la réalisation de la carcasse, ce qui simplifie l'approvisionnement et donc la fabrication industrielle de la carcasse. Les contrôles de qualité effectués sur les matériaux avant usinage peuvent être moins nombreux, ce qui réduit les coûts.

Le fait que l'enveloppe interne et l'enveloppe externe soient fixées entre elles de façon amovible permet de démonter les deux enveloppes pour inspecter le circuit de fluide, le nettoyer si nécessaire, puis de remonter ces dernières, et ceci à tout moment. Une telle inspection permet notamment de vérifier l'absence d'éléments indésirables dans ce dernier à la fois avant la livraison et lors de l'exploitation, comme mentionné plus haut.

De préférence, la pièce métallique de départ est un tube métallique. Cette pièce métallique peut être en acier inoxydable, notamment forgé.

De préférence, l'enveloppe interne est usinée dans une première portion de la pièce métallique de départ et l'enveloppe externe est usinée dans une deuxième portion de la pièce métallique de départ, située dans le prolongement de la première portion. Une telle disposition des deux portions permet une fabrication aisée des deux enveloppes dans la même pièce de départ.

Le procédé comporte l'étape consistant à découper la pièce métallique entre les deux portions, de préférence avant l'usinage des enveloppes.

Le procédé peut comporter l'étape consistant à usiner sur la surface intérieure de l'enveloppe externe et/ou sur la surface extérieure de l'enveloppe interne des nervures, de préférence des nervures longitudinales, pour canaliser le fluide au sein de la double enveloppe. De telles nervures permettent, lorsque les deux enveloppes sont assemblées, de former des chicanes allongeant le parcours du fluide entre les deux enveloppes, notamment l'obligeant à circuler en zigzag, ce qui permet un meilleur refroidissement de la machine électrique.

De préférence, l'étape de fixation des enveloppes interne et externe ne comporte pas de soudure des deux enveloppes entre elles. Ainsi, le démontage peut ne pas nécessiter d'autres opérations qu'un dévissage.

Les enveloppes interne et externe sont, de préférence, fixées entre elles par boulonnage, notamment par boulonnage d'une paroi d'extrémité arrière de l'enveloppe externe sur une paroi d'extrémité arrière de l'enveloppe interne et/ou par boulonnage d'une paroi d'extrémité avant de l'enveloppe externe sur l'enveloppe interne.

Les enveloppes de la carcasse sont, de préférence, usinées de telle sorte qu'après l'assemblage des enveloppes entre elles, la surface intérieure de l'enveloppe externe et la surface extérieure de l'enveloppe interne définissent, notamment entre les nervures précitées, un espace de circulation du fluide.

Les nervures peuvent être formées de telle sorte qu'une fois les enveloppes interne et externe assemblées entre elles, les nervures soient équiréparties autour de la carcasse. Ceci permet de refroidir le moteur de façon homogène.

La carcasse peut comporter entre 6 et 16 nervures.

De préférence, la distance entre deux nervures consécutives dans le sens circonférentiel est comprise entre 6 cm et 30 cm. L'enveloppe externe peut comporter des orifices d'entrée et de sortie du fluide de l'espace de circulation du fluide.

De par l'orientation longitudinale des canaux, les orifices d'entrée et de sortie du fluide peuvent être à sensiblement la même position axiale, à l'opposé l'un de l'autre ou à proximité l'un de l'autre. Ceci permet de faciliter le raccordement de la carcasse à l'alimentation de fluide.

De préférence, l'espace de circulation du fluide est délimité latéralement par deux parois formant brides d'assemblage et les nervures s'étendent alternativement à partir de l'une et de l'autre de ces brides d'assemblage.

La fabrication de la carcasse de machine électrique n'est cependant pas limitée au procédé décrit précédemment. Par exemple, l'enveloppe interne et l'enveloppe externe sont usinées dans des pièces métalliques de départ différentes.

### Carcasse de machine électrique

L'invention a également pour objet, selon un troisième de ses aspects non revendiqué, une carcasse de machine électrique à double enveloppe refroidie par une circulation d'un fluide au sein de la double enveloppe, notamment obtenue par le procédé de fabrication selon le deuxième aspect de l'invention défini précédemment, comportant :
- une enveloppe interne,
- une enveloppe externe, et
- un flasque d'extrémité,

l'enveloppe interne et l'enveloppe externe formant entre elles un espace de circulation du fluide et étant séparables,
l'enveloppe interne présentant une paroi d'extrémité orientée perpendiculairement à l'axe de rotation de la machine et venant en recouvrement, sur une partie de sa hauteur, du flasque d'extrémité et en contact avec celui-ci, et
l'enveloppe externe présentant une paroi d'extrémité arrière orientée perpendiculairement à l'axe de rotation de la machine et venant en recouvrement de la paroi d'extrémité arrière de l'enveloppe interne dans le prolongement du flasque d'extrémité, en ménageant avec ce dernier un jeu radial.

L'invention concerne également une machine électrique comportant une telle carcasse.

Comme mentionné précédemment, le fait que l'enveloppe interne et l'enveloppe externe soient amovibles permet d'inspecter l'espace de circulation de fluide afin notamment de détecter d'éventuels éléments indésirables dans l'espace de circulation du fluide.

De préférence, la carcasse comporte un joint d'étanchéité, notamment un joint torique, entre la paroi d'extrémité arrière de l'enveloppe interne et la paroi d'extrémité arrière de l'enveloppe externe. Un tel joint permet d'assurer l'étanchéité de l'espace de circulation de fluide à l'extrémité de la carcasse. Ce joint peut être logé dans une gorge annulaire usinée dans la paroi d'extrémité arrière de l'enveloppe interne et/ou la paroi d'extrémité arrière de l'enveloppe externe.

Le fait que la paroi d'extrémité de l'enveloppe interne soit au contact d'un flasque et que la paroi d'extrémité de l'enveloppe externe et le flasque d'extrémité soient séparés par un jeu radial garantit que le fluide qui pourrait s'échapper de l'espace de circulation de fluide en cas de défaillance du joint d'étanchéité ne s'écoule pas à l'intérieur mais vers l'extérieur, au travers du jeu radial. Ainsi, l'intérieur de la machine reste protégé vis-à-vis d'une éventuelle défaillance du joint.

De préférence, le jeu radial est compris entre 0,5 mm et 5 mm.

Comme mentionné plus haut, il est avantageux que l'enveloppe interne et l'enveloppe externe soient en acier inoxydable, venu de forge.

La surface extérieure de l'enveloppe interne et/ou la surface interne de l'enveloppe externe présentent, de préférence, des nervures, notamment des nervures longitudinales, formant des chicanes dans l'espace de circulation du fluide. Ces nervures sont préférentiellement telles que définies plus haut.

La carcasse peut comporter au moins une vis sans tête portée par l'une des enveloppes et l'autre enveloppe un perçage dans lequel peut s'engager cette vis. Cela permet, au montage des enveloppes, un repérage angulaire de l'enveloppe interne par rapport à l'enveloppe externe.

L'enveloppe interne et/ou l'enveloppe externe peuvent comporter des pattes de levage de la carcasse.

La circulation du fluide s'effectue de préférence avec l'extérieur, et l'enveloppe externe peut comporter un orifice d'entrée du fluide dans l'espace de circulation de fluide et un orifice de sortie de fluide de cet espace de circulation de fluide.

L'enveloppe externe peut recouvrir l'enveloppe interne sur une partie seulement de sa longueur.

De préférence, comme mentionné plus haut, la paroi d'extrémité de l'enveloppe externe est fixée de façon amovible à l'enveloppe interne par boulonnage.

L'enveloppe interne peut comporter un passage de câble vers une boite à bornes.

### Procédé d'inspection

L'invention a également pour objet un procédé d'inspection de l'espace de circulation de fluide d'une carcasse de machine électrique telle que définie précédemment selon le troisième aspect de l'invention non revendiqué, comportant les étapes consistant à séparer l'enveloppe externe de l'enveloppe interne, notamment en dévissant des boulons de fixation de l'enveloppe externe sur l'enveloppe interne, et à inspecter l'espace de circulation du fluide pour vérifier l'absence d'éléments indésirables.

L'invention pourra être mieux comprise à la lecture de la description détaillée qui va suivre, d'exemples de mise en œuvre non limitatifs de celle-ci, et à l'examen du dessin annexé, sur lequel :
- la figure 1 représente schématiquement en coupe un moteur électrique selon l'invention,
- la figure 2 représente l'enveloppe interne de la carcasse illustrée sur la figure 1,
- la figure 3 est une vue schématique en coupe des enveloppes interne et externe assemblées de la carcasse illustrée sur la figure 1,
- la figure 4 est une vue agrandie de l'extrémité du moteur de la figure 1,
- la figure 5 représente schématiquement la machine électrique selon l'invention,
- la figure 6 est une vue schématique en coupe d'un détail de la machine électrique selon l'invention illustrant la séparation des enveloppes,
- la figure 7 représente schématiquement le montage d'une boîte à bornes sur une machine électrique selon l'invention,
- la figure 8 illustre schématiquement la séparation des enveloppes internes et externes d'une machine électrique selon l'invention, et
- la figure 9 représente une variante de carcasse selon l'invention.

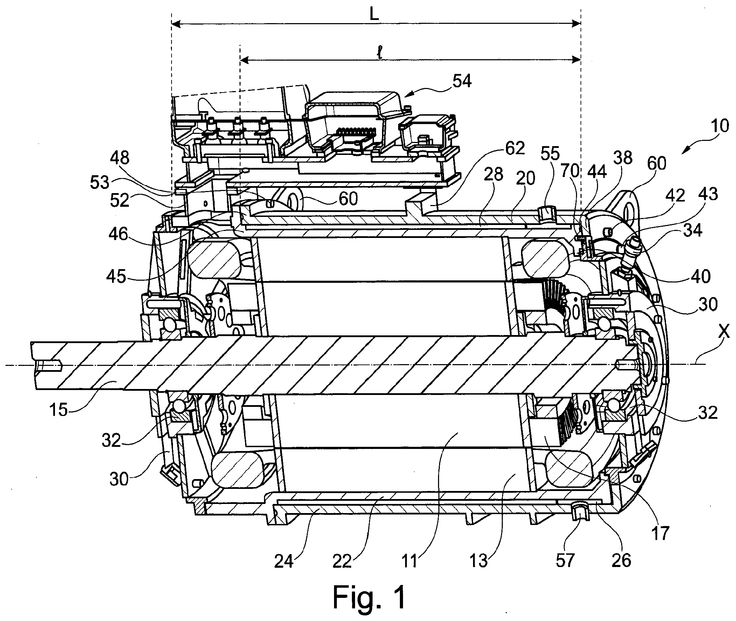

La machine électrique 10 représentée sur les figures 1 à 8 est un moteur comportant une carcasse 20 de forme allongée selon un axe longitudinal X, fermée à ses deux extrémités axiales par des flasques 30 avant et arrière.

La carcasse 20 entoure un stator 13, à l'intérieur duquel tourne le rotor 11.

Le rotor 11 comporte un arbre 15 d'axe longitudinal X guidé par des roulements 32 portés par les flasques 30, de façon conventionnelle. Il peut comporter également des pales de ventilation 17 à l'avant et à l'arrière à ses extrémités avant et arrière.

Les flasques 30 comportent chacun un graisseur 34 pour alimenter les roulements 32 en lubrifiant.

La carcasse 20 comporte une enveloppe interne 22 emboitée dans une enveloppe externe 24. L'enveloppe interne 22 et l'enveloppe externe 24 forment entre elles un espace de circulation 26 du fluide s'étendant sur toute la circonférence du moteur électrique 10.

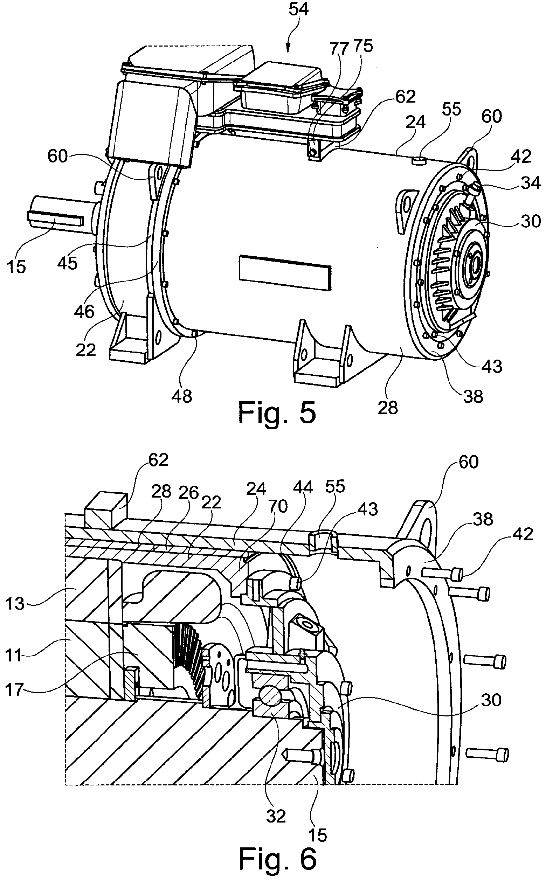

Sur les figures 5 à 8, l'enveloppe externe 24 est représentée en transparence pour illustration.

La circulation de fluide dans cet espace 26 est guidée par des nervures longitudinales 28.

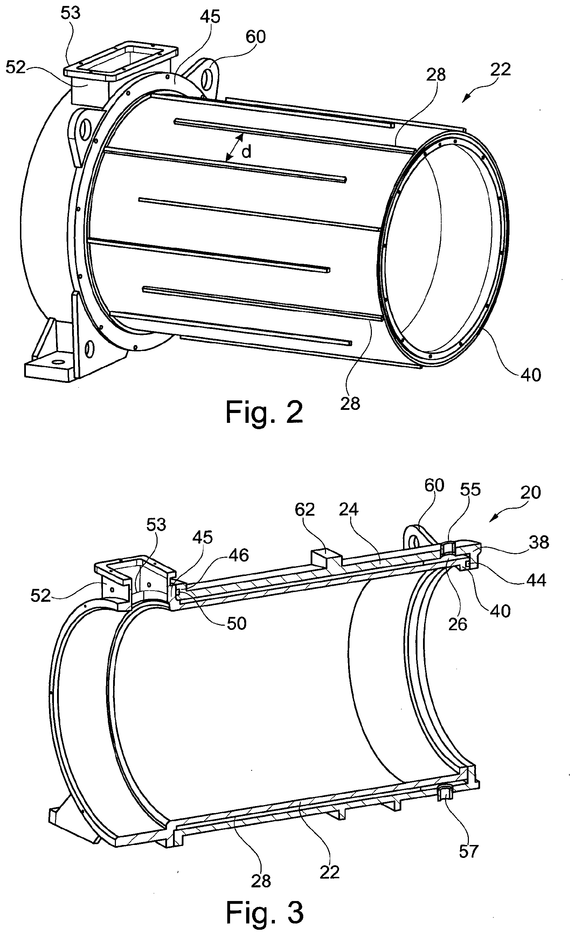

Comme visible sur la figure 2, ces nervures longitudinales 28 forment saillie sur la surface extérieure de l'enveloppe interne 22.

Dans une variante non illustrée, les nervures 28 s'étendent depuis la surface interne de l'enveloppe externe 24, ou s'étendent depuis la surface extérieure de l'enveloppe interne 22 et depuis la surface interne de l'enveloppe externe 24.

Les nervures 28 sont équiréparties autour de l'axe longitudinal et s'étendent alternativement jusqu'à l'une et l'autre des parois constituant des brides d'assemblage avant 45 et arrière 38 délimitant axialement l'espace 26, de sorte à former des chicanes pour forcer le fluide à suivre un parcours en zigzag.

Les nervures 28 sont de section constante sur toute leur longueur.

La carcasse 20 peut comporter entre 6 et 16 nervures 28.

La distance *d* bord à bord entre deux nervures 28 consécutives est comprise entre 6 cm et 30 cm.

L'enveloppe externe 24 comporte des ouvertures d'entrée du fluide 55 dans l'espace de circulation 26 et de sortie du fluide 57 de celui-ci.

Le positionnement angulaire de l'enveloppe externe 24 par rapport à l'enveloppe interne se fait à l'aide d'une vis sans tête 70 vissée dans un taraudage 72 de l'enveloppe interne 22 et engagée dans un trou correspondant de l'enveloppe externe 24.

L'enveloppe externe 24 comporte une paroi d'extrémité avant 46 fixée à la bride d'assemblage avant 45 de l'enveloppe interne 22 par des boulons 48. L'une au moins de la paroi d'extrémité avant 46 et de la bride d'assemblage avant 45 comporte, comme illustré sur les figures 1 et 3, une gorge annulaire 50 recevant un joint d'étanchéité torique non représenté. Un tel joint permet d'assurer l'étanchéité de l'espace de circulation de fluide 26 du côté de l'extrémité avant du moteur électrique 10.

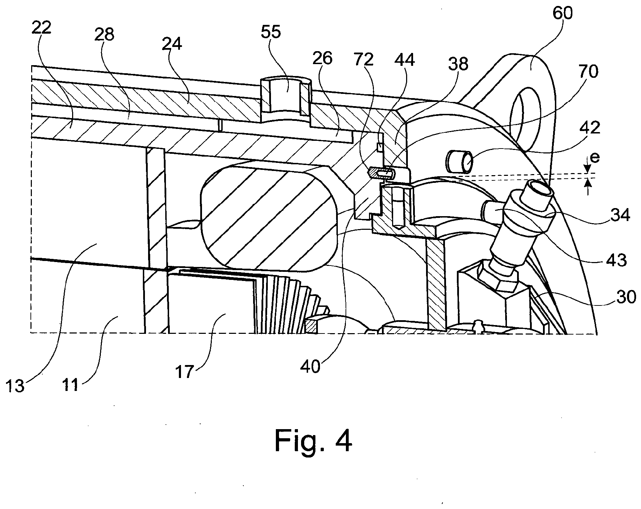

Comme cela est illustré sur les figures 4 et 6, l'enveloppe externe 24 comporte la paroi arrière 38 formant bride d'assemblage fixée à une paroi d'extrémité arrière 40 de l'enveloppe interne 22 par des boulons 42.

La paroi d'extrémité arrière 40 peut comporter, comme illustré sur les figures 1 et 4, une gorge annulaire 44 disposée en regard de la paroi d'extrémité arrière 38 de l'enveloppe externe 24, et recevant un joint d'étanchéité torique non représenté. Un tel joint permet d'assurer l'étanchéité de l'assemblage entre les enveloppes du côté de l'extrémité arrière du moteur électrique 10.

Le flasque 30 arrière du moteur 10 vient au contact de la paroi d'extrémité arrière 40 de l'enveloppe interne 22 et est fixée à la paroi d'extrémité arrière 40 de l'enveloppe interne 22 par des boulons 43.

La paroi d'extrémité arrière 38 de l'enveloppe externe 24 se superpose au moins partiellement radialement au flasque arrière 30 en ménageant avec ce dernier un jeu radial e compris par exemple entre 0,5 mm et 5 mm, par exemple sensiblement égal à 2 mm. Le flasque arrière 30 et la paroi d'extrémité arrière 38 de l'enveloppe externe 24 ne sont pas superposés.

L'enveloppe externe 24 recouvre axialement l'enveloppe interne 22 sur une longueur *l* inférieure à celle *L* de l'enveloppe interne 22. Ainsi, une partie de l'enveloppe interne 22 est libre relativement à l'enveloppe externe 24 de sorte à pouvoir porter en particulier une boîte à bornes 54 sans que son démontage ne soit nécessaire pour la séparation de l'enveloppe interne 22 et de l'enveloppe externe 24.

Dans cette partie de l'enveloppe interne non recouverte par l'enveloppe externe 24, l'enveloppe interne 22 présente un passage de câbles 52 vers une boite à bornes 54. Le passage de câbles 52 comporte une bride d'assemblage 53 de la boîte à bornes 54 sur laquelle la boîte à bornes 54 est fixée par des boulons 56, comme cela est représenté sur les figures 1, 5, 7 et 8.

Dans l'exemple illustré, la boîte à bornes 54 s'étend vers l'arrière du moteur dans le prolongement de la partie de la carcasse 20 dans laquelle les deux enveloppes 22 et 24 se superposent.

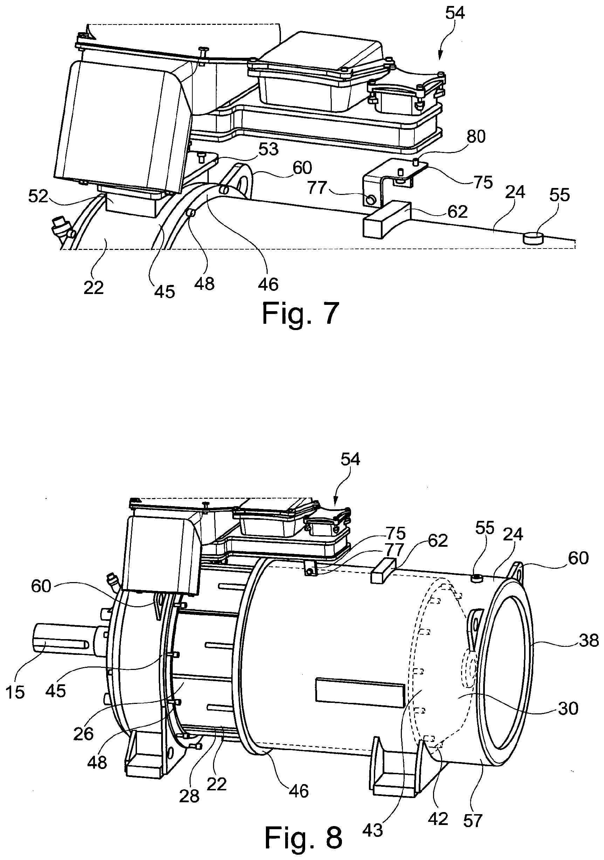

Comme cela est illustré sur la figure 7, l'enveloppe externe 24 peut comporter un support 62 de la boîte à bornes 54 sur lequel est fixé un étrier 75 de fixation de la boîte à bornes 54 au support 54. Les pattes de l'étrier 75 sont fixées aux parois latérales du support 62 par des boulons 77 et la base de l'étrier 75 est fixée à la boîte à bornes 54 par des boulons 80. Il est ainsi possible de retirer facilement les boulons 77 de sorte à détacher aisément l'étrier 75 de l'enveloppe externe 24 sans avoir à le séparer de la boîte à bornes 54. Ainsi, il n'est pas nécessaire de démonter la boîte à bornes 54 pour séparer les deux enveloppes 22 et 24.

Les enveloppes 22 et 24 présentent des pattes de levage 60.

Les deux enveloppes 22 et 24 peuvent être réalisées par usinage d'un unique tube cylindrique en acier inoxydable, l'enveloppe interne étant réalisée dans une première portion du tube, et l'enveloppe externe dans une deuxième portion du tube située dans le prolongement de la première portion. Mais il peut en être autrement.

Pour inspecter l'espace 26 de circulation de fluide, comme cela est illustré sur les figures 6 et 8, l'utilisateur peut
- vidanger l'espace de circulation de fluide 26 en évacuant le fluide par l'orifice de sortie de fluide 57,
- déboulonner les boulons 42, 48 et 77 pour détacher l'enveloppe externe 24 de l'enveloppe interne 22 et de l'étrier 75,
- faire coulisser l'enveloppe externe 24 vers l'arrière sur l'enveloppe interne 22, de sorte à ouvrir l'espace 26 entre les deux enveloppes.

Une fois l'inspection terminée, l'utilisateur peut facilement remonter la carcasse en procédant de façon inverse.

L'utilisateur n'a donc pas eu à démonter le flasque 30 arrière, ni la boîte à bornes 54 pour procéder à l'inspection.

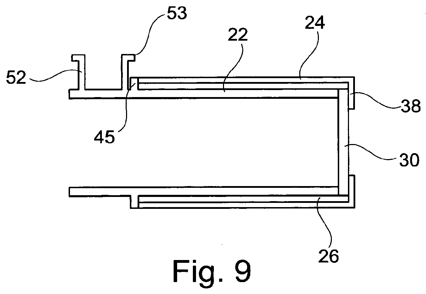

Dans la variante illustrée sur la figure 9, la paroi d'extrémité arrière 38 de l'enveloppe externe 24 s'étend en arrière de l'enveloppe interne 22 et du flasque 30 arrière. Elle peut être fixé par boulonnage sur le flasque 30 arrière. Elle peut alors coulisser vers l'arrière sans en être empêchée par le flasque arrière, ce qui évite qu'il soit nécessaire de démonter ce dernier pour inspecter l'espace de circulation du fluide 26.

## Revendications

1. Carcasse (20) de machine électrique à double enveloppe (10) refroidie par une circulation d'un fluide au sein de la double enveloppe, comportant
- une enveloppe interne (22) présentant une paroi d'extrémité arrière (40) orientée perpendiculairement à un axe de rotation de la machine,
- un flasque d'extrémité (30), et
- une enveloppe externe (24),
l'enveloppe externe (24) et l'enveloppe interne (22) définissant entre elles un espace de circulation du fluide (26),
l'enveloppe externe (24) est fixée de façon amovible à l'enveloppe interne (22) et étant configurée pour être amovible par coulissement le long de l'enveloppe interne (22) vers l'arrière, de sorte que l'enveloppe externe (24) soit emmanchée par l'avant sur l'enveloppe interne (22) et séparable de cette dernière,
la carcasse étant **caractérisé en ce que** le flasque d'extrémité (30) est en contact et est fixé à la paroi d'extrémité arrière (40) de l'enveloppe interne (22) à l'arrière,
la paroi d'extrémité arrière (40) de l'enveloppe interne (22) vient en recouvrement sur une partie de sa hauteur du flasque d'extrémité (30),
l'enveloppe externe (24) présente une paroi d'extrémité arrière (38) orientée perpendiculairement à l'axe de rotation (X) de la machine (10), venant au moins partiellement en recouvrement de l'enveloppe interne (22) dans le prolongement du flasque d'extrémité (30) de sorte que la séparation de l'enveloppe externe (24) et de l'enveloppe interne (22) puisse se faire sans démontage du flasque d'extrémité (30),
la paroi d'extrémité arrière (38) de l'enveloppe externe (24) est fixée à la paroi d'extrémité arrière (40) de l'enveloppe interne (22) par des boulons de fixation (42), et
l'enveloppe externe (24) ménage avec le flasque d'extrémité (30) un jeu radial e, notamment compris entre 0,5 mm et 5 mm.

2. Carcasse selon la revendication 1, le flasque d'extrémité (30) étant dépourvu d'éléments de fixation à l'enveloppe externe (24).

3. Carcasse selon l'une quelconque des revendications précédentes, l'enveloppe externe (24) recouvrant l'enveloppe interne (22) sur une partie seulement de sa longueur.

4. Carcasse selon l'une quelconque des revendications précédentes, l'enveloppe interne comportant une bride d'assemblage avant (45) sur laquelle une paroi d'extrémité avant (46) de l'enveloppe externe (24) est fixée.

5. Carcasse selon l'une quelconque des revendications précédentes, l'enveloppe interne (22) comportant un passage de câbles (52) vers une boîte à bornes (54) de la machine sur lequel est monté la boîte à bornes (54), le passage de câbles (52) étant en avant de l'enveloppe externe, notamment en avant de la bride d'assemblage avant (45) de l'enveloppe interne (22), de préférence l'enveloppe externe (24) comportant un support de boîte à bornes (62) sur lequel la boîte à bornes (54) de la machine est fixée de manière amovible.

6. Carcasse selon l'une quelconque des revendications précédentes, la surface extérieure de l'enveloppe interne (22) et/ou la surface interne de l'enveloppe externe (24) présentant des nervures (28), de préférence longitudinales, formant des chicanes dans l'espace de circulation du fluide (26).

7. Carcasse selon l'une quelconque des revendications, comportant un joint d'étanchéité entre la paroi d'extrémité arrière (40) de l'enveloppe interne (22) et la paroi d'extrémité arrière (38) de l'enveloppe externe (24).

8. Carcasse selon l'une quelconque des revendications précédentes, comportant au moins une vis sans tête (70) portée par l'une des enveloppes (22 ; 24) et l'autre enveloppe (22 ; 24) comportant un perçage dans lequel peut s'engager cette vis (70).

9. Carcasse selon l'une quelconque des revendications précédentes, l'enveloppe externe (24) comportant un orifice d'entrée du fluide (55) dans l'espace de circulation de fluide (26) et un orifice de sortie de fluide (57) de l'espace de circulation de fluide (26).

10. Machine électrique à double enveloppe (10) refroidie par une circulation d'un fluide au sein de la double enveloppe comportant une carcasse (20) selon l'une quelconque des revendications précédentes, de préférence la machine comportant une boîte à bornes (54) fixé, notamment de manière amovible, sur l'enveloppe externe (24), notamment sur un passage de câble (52) vers la boîte à bornes (54), de préférence l'enveloppe externe (24) étant séparable de l'enveloppe interne (22) sans démontage de la boîte à bornes (54) de l'enveloppe interne (22).

11. Procédé d'inspection de l'espace de circulation de fluide (26) d'une carcasse (20) de machine électrique (10) selon l'une quelconque des revendications 1 à 9, comportant les étapes consistant à dévisser les boulons de fixation (42) de la paroi d'extrémité arrière (38) de l'enveloppe externe (24) avec la paroi d'extrémité arrière (40) de l'enveloppe interne (22) puis à démonter l'enveloppe externe et à inspecter l'espace de circulation du fluide (26) pour vérifier l'absence d'éléments indésirables, en faisant coulisser l'enveloppe externe (24) sur l'enveloppe interne (22) vers l'arrière sans démonter le flasque d'extrémité (30).

## Patentansprüche

1. Gehäuse (20) einer elektrischen Maschine mit doppelter Umhüllung (10), die durch eine Strömung eines Fluids im Inneren der doppelten Umhüllung gekühlt wird, umfassend:
- eine innere Umhüllung (22), die eine hintere Endwand (40) aufweist, die senkrecht zu einer Drehachse der Maschine ausgerichtet ist,
- einen Endflansch (30) und
- eine äußere Umhüllung (24),
wobei die äußere Umhüllung (24) und die innere Umhüllung (22) zwischen sich einen Strömungsraum für das Fluid (26) definieren,
wobei die äußere Umhüllung (24) lösbar an der inneren Umhüllung (22) befestigt ist und dafür ausgelegt ist, durch Gleiten entlang der inneren Umhüllung (22) nach hinten lösbar zu sein, so dass die äußere Umhüllung (24) von vorn auf die innere Umhüllung (22) aufgesteckt wird und von dieser Letzteren trennbar ist,
wobei das Gehäuse **dadurch gekennzeichnet ist, dass** der Endflansch (30) sich mit der hinteren Endwand (40) der inneren Umhüllung (22) hinten in Kontakt befindet und an ihr befestigt ist,
die hintere Endwand (40) der inneren Umhüllung (22) auf einem Teil ihrer Höhe den Endflansch (30) bedeckt,
die äußere Umhüllung (24) eine hintere Endwand (38) aufweist, die senkrecht zur Drehachse (X) der Maschine (10) ausgerichtet ist, wobei sie die innere Umhüllung (22) in der Verlängerung des Endflansches (30) wenigstens teilweise bedeckt, so dass die Trennung der äußeren Umhüllung (24) und der inneren Umhüllung (22) ohne Demontage des Endflansches (30) vorgenommen werden kann, die hintere Endwand (38) der äußeren Umhüllung (24) an der hinteren Endwand (40) der inneren Umhüllung (22) durch Befestigungsbolzen (42) befestigt ist und
die äußere Umhüllung (24) mit dem Endflansch (30) ein Radialspiel e erzeugt,
das insbesondere zwischen 0,5 mm und 5 mm liegt.

2. Gehäuse nach Anspruch 1, wobei der Endflansch (30) nicht mit Elementen zur Befestigung an der äußeren Umhüllung (24) versehen ist.

3. Gehäuse nach einem der vorhergehenden Ansprüche, wobei die äußere Umhüllung (24) die innere Umhüllung (22) nur auf einem Teil ihrer Länge bedeckt.

4. Gehäuse nach einem der vorhergehenden Ansprüche, wobei die innere Umhüllung einen vorderen Verbindungsflansch (45) umfasst, an dem eine vordere Endwand (46) der äußeren Umhüllung (24) befestigt ist.

5. Gehäuse nach einem der vorhergehenden Ansprüche, wobei die innere Umhüllung (22) eine Kabeldurchführung (52) zu einem Klemmenkasten (54) der Maschine, an welcher der Klemmenkasten (54) angebracht ist, umfasst, wobei sich die Kabeldurchführung (52) vor der äußeren Umhüllung befindet, insbesondere vor dem vorderen Verbindungsflansch (45) der inneren Umhüllung (22), wobei die äußere Umhüllung (24) vorzugsweise einen Klemmenkastenhalter (62) umfasst, an dem der Klemmenkasten (54) der Maschine lösbar befestigt ist.

6. Gehäuse nach einem der vorhergehenden Ansprüche, wobei die Außenfläche der inneren Umhüllung (22) und/oder die Innenfläche der äußeren Umhüllung (24) Rippen (28) aufweisen, vorzugsweise Längsrippen, die in dem Strömungsraum für das Fluid (26) Stauelemente bilden.

7. Gehäuse nach einem der vorhergehenden Ansprüche, welches eine Dichtung zwischen der hinteren Endwand (40) der inneren Umhüllung (22) und der hinteren Endwand (38) der äußeren Umhüllung (24) umfasst.

8. Gehäuse nach einem der vorhergehenden Ansprüche, welches mindestens einen Gewindestift (70) umfasst, der von einer der Umhüllungen (22; 24) getragen wird, und wobei die andere Umhüllung (22; 24) eine Bohrung umfasst, in die dieser Stift (70) eingreifen kann.

9. Gehäuse nach einem der vorhergehenden Ansprüche, wobei die äußere Umhüllung (24) eine Öffnung für den Eintritt des Fluids (55) in den Fluidströmungsraum (26) und eine Öffnung für den Austritt des Fluids (57) aus dem Fluidströmungsraum (26) umfasst.

10. Elektrische Maschine mit doppelter Umhüllung (10), die durch eine Strömung eines Fluids im Inneren der doppelten Umhüllung gekühlt wird, welche ein Gehäuse (20) nach einem der vorhergehenden Ansprüche umfasst, wobei die Maschine vorzugsweise nicht Klemmenkasten (54) umfasst, der, insbesondere lösbar, auf der äußeren Umhüllung (24) befestigt ist, insbesondere auf einer Kabeldurchführung (52) zum Klemmenkasten (54), wobei vorzugsweise die äußere Umhüllung (24) von der inneren Umhüllung (22) ohne Demontage des Klemmenkastens (54) von der inneren Umhüllung (22) trennbar ist.

11. Verfahren zur Inspektion des Fluidströmungsraumes (26) eines Gehäuses (20) einer elektrischen Maschine (10) nach einem der Ansprüche 1 bis 9, welches die Schritte umfasst, die darin bestehen, die Bolzen zur Befestigung (42) der hinteren Endwand (38) der äußeren Umhüllung (24) an der hinteren Endwand (40) der inneren Umhüllung (22) loszuschrauben, danach die äußere Umhüllung zu demontieren und den Strömungsraum für das Fluid (26) zu inspizieren, um zu überprüfen, ob keine unerwünschten Elemente vorhanden sind, indem die äußere Umhüllung (24) auf der inneren Umhüllung (22) nach hinten geschoben wird, ohne den Endflansch (30) zu demontieren.

## Claims

1. Frame (20) of a double-casing electric machine (10), said frame being cooled by a fluid circulating inside the double casing, comprising
- an inner casing (22) having a rear end wall (40) oriented perpendicular to an axis of rotation of the machine,
- an end plate (30), and
- an outer casing (24),
the outer casing (24) and the inner casing (22) defining a fluid circulation space (26) between them,
the outer casing (24) is removably fastened to the inner casing (22) and being configured to be able to be removed by sliding rearwards along the inner casing (22), so that the outer casing (24) is fitted from the front over the inner casing (22) and can be separated therefrom,
the frame being **characterized in that** the end plate (30) is in contact with and is fastened to the rear end wall (40) of the inner casing (22) at the rear,
the rear end wall (40) of the inner casing (22) overlaps with the end plate (30) over part of its height,
the outer casing (24) has a rear end wall (38) oriented perpendicular to the axis of rotation (X) of the machine (10), at least partially overlapping with the inner casing (22) in the extension of the end plate (30) so that the outer casing (24) and the inner casing (22) can be separated without removing the end plate (30),
the rear end wall (38) of the outer casing (24) is fastened to the rear end wall (40) of the inner casing (22) by fastening bolts (42), and
the outer casing (24) forms, with the end plate (30), a radial clearance e,
in particular of between 0.5 mm and 5 mm.

2. Frame according to Claim 1, the end plate (30) having no elements for fastening to the outer casing (24).

3. Frame according to either one of the preceding claims, the outer casing (24) overlapping with the inner casing (22) over only part of its length.

4. Frame according to any one of the preceding claims, the inner casing comprising a front assembly flange (45) to which a front end wall (46) of the outer casing (24) is fastened.

5. Frame according to any one of the preceding claims, the inner casing (22) having a cable passage (52) towards a terminal box (54) of the machine, the terminal box (54) being mounted on said cable passage, the cable passage (52) being in front of the outer casing, in particular in front of the front assembly flange (45) of the inner casing (22), the outer casing (24) preferably comprising a terminal box support (62) to which the terminal box (54) of the machine is removably fastened.

6. Frame according to any one of the preceding claims, the outer surface of the inner casing (22) and/or the inner surface of the outer casing (24) having ribs (28), which are preferably longitudinal, forming baffles in the fluid circulation space (26).

7. Frame according to any one of the claims, comprising a seal between the rear end wall (40) of the inner casing (22) and the rear end wall (38) of the outer casing (24).

8. Frame according to any one of the preceding claims, comprising at least one headless screw (70) carried by one of the casings (22; 24) and the other casing (22; 24) comprising a drilled hole in which this screw (70) can engage.

9. Frame according to any one of the preceding claims, the outer casing (24) comprising a fluid inlet orifice (55) for letting the fluid into the fluid circulation space (26) and a fluid outlet orifice (57) for letting fluid out of the fluid circulation space (26).

10. Double-casing electric machine (10), which is cooled by a fluid circulating inside the double casing and comprises a frame (20) according to any one of the preceding claims, the machine preferably comprising a terminal box (54), which is fastened, in particular removably, to the outer casing (24), in particular to a cable passage (52) towards the terminal box (54), the outer casing (24) preferably being able to be separated from the inner casing (22) without removing the terminal box (54) from the inner casing (22).

11. Method for inspecting the fluid circulation space (26) of a frame (20) of an electric machine (10) according to any one of Claims 1 to 9, comprising the steps of unscrewing the fastening bolts (42) fastening the rear end wall (38) of the outer casing (24) to the rear end wall (40) of the inner casing (22), then removing the outer casing and inspecting the fluid circulation space (26) to check that there are no undesirable elements, by sliding the outer casing (24) rearwards over the inner casing (22) without removing the end plate (30).
